# EUROPEAN PATENT APPLICATION

(11) **EP 2 091 014 A1**
(43) Date of publication of application: **19.08.2009**
(21) Application number: 07738510.2
(22) Date of filing: 14.03.2007
(51) Int. Cl.: G06Q 30/00, H04N 7/173

(54) **ADVERTISEMENT SYSTEM AND COMMODITY SALE SYSTEM**

(30) Priority: 15.03.2006 JP 2006071583
(71) Applicant: NEC Corporation, Minato-ku Tokyo 108-8001 (JP)
(72) Inventor: KOGURE, Yuki, Tokyo 108-8001 (JP)
(74) Representative: Glawe, Delfs, Moll
(86) International application number: PCT/JP2007/055039
(87) International publication number: WO 2007/105750

(57) **Abstract**

A commodity sales system (100) includes an advertisement-data creation device that extracts, upon receiving an advertisement transmission request specifying a commodity via the network from a mobile phone (103), advertisement data of the commodity specified by the transmission request from an advertisement database storing therein a commodity, advertisement data of the commodity and privilege information in association, to create advertisement data; a registration device that registers information specifying the mobile phone (103) that transmitted the transmission request, the commodity corresponding to the extracted advertisement data, and the privilege information in a client-information database in association with one another; and a privilege-information extraction device that extracts, when the mobile phone (103) issues a commodity purchase request, a privilege to be offered to the terminal unit (103) that transmitted the commodity purchase request with reference to the client-information database.

## Description

### TECHNICAL FIELD

The present invention relates to an advertisement system and a commodity sales system, and more particularly, to an advertisement system and a commodity sales system which are suitably applied to a system using a terrestrial digital broadcasting directed to communication terminal units.

### BACKGROUND ART

A digital broadcasting directed to mobile communication terminal, such as a mobile phone, is realized along with operation of the terrestrial digital broadcasting. In the terrestrial digital broadcasting in Japan, a single channel is divided into thirteen "segments", some of which are combined together for broadcasting transmission of video, audio and data. One of these segments is reserved for mobile communication terminals, and a broadcasting directed to the mobile communication terminals by using this one is referred to as "single segment broadcasting (one-segment broadcasting)."

In the one-segment broadcasting, as in the case of a typical broadcasting directed to television sets, an advertisement is performed by a sponsor company in the broadcast program or an interval between broadcast programs. During broadcasting of the advertisement, the merit received by the sponsor company may be enlarged by increasing the interest of viewers on the advertisement. Thus, for the terrestrial digital broadcasting directed to mobile communication terminals, a variety of techniques using the function of the mobile communication terminals have been proposed heretofore to increase the interest of viewers on the advertisement.

For example, JP-2003-114999A describes a commodity sales system which offers a privilege to the viewers during receiving the advertisement. In this publication, a mobile phone receives from the broadcasting station a plurality of mark signals at time intervals during broadcasting hours of an online shopping program, and stores therein these mark signals. After the end of the program, the mobile phone counts up the number of mark signals received by the mobile phone, and also receives information of the sum total of the mark signals. Privilege information that can offer a privilege, such as a discount, is generated on the condition that the number of mark signals coincides with information of the sum total of mark signals.

It is recited in the above publication that since the privilege information is generated if the online shopping program is received from the beginning to the last thereof, motivation to reception of the advertisement can be provided to the viewers. In this commodity sale system, however, there is a problem in that the mobile phone must perform the processings of counting up the number of mark signals, and comparing the counted number of mark signals against the information of sum total of the mark signals, which complicate the processings in the mobile phone. There is also another problem in that since most of the viewers generally use the mobile phone during a movement, the mark signals cannot be received, even if the viewers desire reception of the program, when the user moves temporarily to outside the service area of the data broadcasting.

### SUMMARY OF THE INVENTION

It is an object of the present invention to provide an advertisement system and a commodity sales system, which are capable of providing a privilege even if the user of a terminal unit temporarily moves to outside the service area of the data broadcasting, and providing the user with a motivation to receiving an advertisement

The present invention provides, in a first aspect thereof, an advertisement system for advertising a commodity via a communication network, including:
an advertisement-data extraction device that extracts, upon receiving an advertisement transmission request specifying a commodity via the communication network from a terminal unit, advertisement data of the commodity specified by the transmission request from an advertisement database storing therein advertisement data of commodities;
an advertisement-data transmission device that transmits via the communication network the extracted advertisement data, after attaching privilege information thereto, to the terminal unit that transmitted the transmission request;
a registration device that registers in a client-information database information specifying the destination terminal unit to which the advertisement transmission request is transmitted, a commodity corresponding to the extracted advertisement data, and the privilege information in association with one another; and
a privilege-information extraction device that extracts, upon receiving a commodity purchase request from a terminal unit, a privilege to be offered to the terminal unit that transmitted the commodity purchase request, with reference to the client-information database.

The present invention provides, in a second aspect thereof a commodity sales system including:
a broadcasting unit that transmits a digital broadcasting including information of a commodity;
an advertisement-data extraction device that extracts, upon receiving an advertisement transmission request specifying a commodity via a communication network from a terminal unit that received the digital broadcasting, advertisement data of the commodity specified by the transmission request from an advertisement database storing therein advertisement data of commodities;
an advertisement-data transmission device that transmits the extracted advertisement data via the communication network, after attaching privilege information whereto, to the terminal unit that transmitted the transmission request;
a registration device that registers in a client-information database information specifying the destination terminal unit to which the privilege information is transmitted, a commodity corresponding to the extracted advertisement data, and the privilege information in association with one another;
a privilege-information extraction device that extracts, upon receiving a commodity purchase request from a terminal unit, a privilege to be offered to the terminal unit that transmitted the commodity purchase request, with reference to the client information database; and
a privilege offering device that offers the extracted privilege to the terminal unit that transmitted the commodity purchase request.

The present invention provides, in a third aspect thereof, an advertisement method using a server connected to a terminal unit via a communication network, for advertising a commodity through the sever, the method including the steps of
the server extracting, upon receiving an advertisement transmission request specifying a commodity via the communication network from a terminal unit, advertisement data of the commodity specified by the transmission request from an advertisement database storing therein advertisement data of commodities;
the server transmitting the extracted advertisement data via the communication network, after attaching privilege information thereto, to the terminal unit that transmitted the transmission request;
the server registering in a client-information database information specifying the destination terminal unit to which the privilege information is transmitted, a commodity corresponding to the extracted advertisement data, and the privilege information in association with one another; and
the server extracting, upon receiving a commodity purchase request from a terminal unit, a privilege to be offered to the terminal unit that transmitted the commodity purchase request, with reference to the client-information database.

The present invention provides, in a fourth aspect thereof, a commodity sales method using a broadcasting unit that transmits a digital broadcasting and a server that manages an online advertisement using the digital broadcasting, the method including the steps of:
the broadcasting unit transmitting a digital broadcasting including a commodity name;
the server extracting, upon receiving from a terminal unit an advertisement transmission request for the commodity name that is broadcasted, advertisement data of the commodity specified by the commodity name from an advertisement database storing therein advertisement data of commodities;
the server transmitting the extracted advertisement data via the communication network, after attaching privilege information thereto, to the terminal unit that transmitted the transmission request;
the server registering in a client-information database information specifying the destination terminal unit to which the privilege information is transmitted, a commodity corresponding to the extracted advertisement data, and the privilege information in association with one another;
the server extracting, upon receiving a commodity purchase request from a terminal unit, a privilege to be offered to the terminal unit that transmitted the commodity purchase request, with reference to the client-information database; and
the server offering the extracted privilege to the terminal unit that transmitted the commodity purchase request

The present invention provides, in a fifth aspect thereof, a program for an advertisement system including a server connected to a terminal unit via a communication network for advertising a commodity, the program allowing the server to execute the steps of:
extracting, upon receiving an advertisement transmission request specifying a commodity via the communication network from a terminal unit, advertisement data of the commodity specified by the transmission request from an advertisement database storing therein advertisement data of commodities;
transmitting the extracted advertisement data via the communication network, after attaching privilege information thereto, to the terminal unit that transmitted the transmission request;
registering in a client-information database information specifying the destination terminal unit to which the privilege information is transmitted, a commodity corresponding to the extracted advertisement data, and the privilege information in association with one another; and
extracting, upon receiving a commodity purchase request from a terminal unit, a privilege to be offered to the terminal unit that transmitted the commodity purchase request, with reference to the client-information database.

The present invention provides, in a sixth aspect thereof, a program for a commodity sales system including a server that manages an online advertisement using the digital broadcasting, the program allowing the server to execute the steps of:
extracting, upon receiving from a terminal unit an advertisement transmission request for the commodity name that is broadcasted, advertisement data of the commodity specified by the commodity name, from an advertisement database storing therein advertisement data of commodities;
transmitting the extracted advertisement data via the communication network, after attaching privilege information thereto, to the terminal unit that transmitted the transmission request;
registering in a client-information database information specifying the destination terminal unit to which the privilege information is transmitted, a commodity corresponding to the extracted advertisement data, and the privilege information in association with one another;
extracting, upon receiving a commodity purchase request from a terminal unit, a privilege to be offered to the terminal unit that transmitted the commodity purchase request, with reference to the client-information database; and
offering the extracted privilege to the terminal unit that transmitted the commodity purchase request.

In accordance with the advertisement system and commodity sales system of the present invention, the advertisement-data transmission device attaches, upon transmission of the advertisement data, the privilege information to the advertisement data for transmission, the registration device registers information specifying the destination terminal unit to which the privilege information is transmitted, the commodity of the extracted advertisement data, and privilege information in association with one another in the privilege-information database, and the privilege-information extraction device extracts with reference to the privilege-information database the privilege to be offered to the terminal unit that transmitted the commodity purchase request Accordingly, the user of the terminal unit can acquire the privilege upon purchase of the commodity by receiving the advertisement prior to purchasing the commodity. Thus, the user of the terminal unit can be provided with a motivation to receiving the advertisement.

In a preferred embodiment of the advertisement system of the present invention, the advertisement database stores therein the advertisement data of commodities and the privilege information to be offered upon purchase of the commodity in association with one other. In the commodity sales system of the present invention, broadcasting unit may transmit the digital broadcasting to the terminal unit via a radio base station.

### BRIEF DESCRIPTION OF THE DRAWINGS

FIG. 1 is a block diagram showing the configuration of a commodity sales system according to an exemplary embodiment of the present invention.
FIG. 2 is a block diagram showing the configuration of the broadcasting unit in FIG. 1.
FIG. 3 is a block diagram showing the configuration of the mobile phone in FIG.1.
FIG. 4 is a block diagram showing the configuration of the data receiving section in FIG. 3.
FIG. 5 is a diagram showing the video data and character information shown on the display section of the mobile phone.
FIG. 6 is a block diagram showing the layer structure of the character information.
FIG. 7 is a flowchart showing the operation procedure of the data receiving section in FIG. 3.
FIG. 8 is a flowchart showing the operation procedure of the commodity-information processing section in FIG. 4.
FIG. 9 is a flowchart showing the operation procedure of the control section in FIG. 3.
FIG. 10 is a block diagram showing the configuration of the online advertisement distribution unit in FIG. 1.
FIG. 11 is a flowchart showing the operation procedure of the online advertisement distribution unit in FIG. 1.
FIG. 12 is a flowchart showing the operation procedure of the purchase processing unit in FIG. 1.

### BEST MODE OF CARRYING OUT THE INTENTION

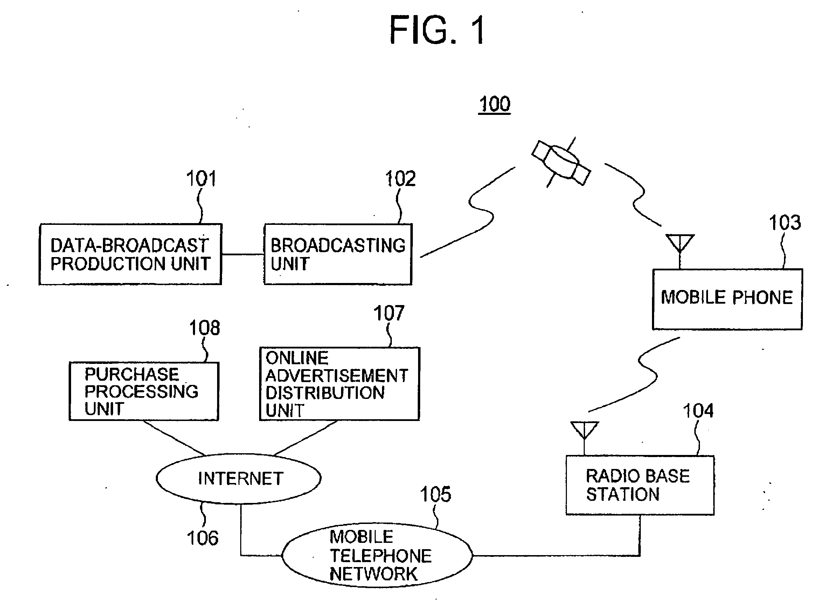

Hereinafter, an exemplary embodiment of the present invention will be described in detail with reference to the drawings. FIG. 1 is a block diagram showing the configuration of a commodity sales system according to an exemplary embodiment of the present invention. The commodity sales system 100 includes a data-broadcast production unit 101, a broadcasting unit 102, a radio base station 104, a mobile telephone network 105, the Internet 106, an online advertisement distribution unit 107, and a purchase processing unit 108, and transmits a one-segment broadcasting to mobile phones (terminal units) 103 including a data-broadcast receiver set

The data-broadcast production unit 10 produces data used for data-broadcast advertisement as well as data used for the broadcast program. The broadcasting unit 102 receives the data produced by the data-broadcast production unit 101, and broadcasts the same as a TV program. The mobile phone 103 includes a data-broadcast receiver set, receives data for the data-broadcast advertisement and data for the broadcast program, and displays the same on a monitor (display section). Data for the data-broadcast advertisement means a CM (Commercial Message) from a sponsor company.

The online advertisement distribution unit 107 and purchase processing unit 108 are each connected to mobile phones 103 via the Internet 106, mobile telephone network 105 and radio base station 104. When the user of a mobile phone 103 operates for receiving online advertisement in order to use the purchase privilege of commodity after receiving the data for data-broadcast advertisement, the mobile phone 103 transmits information of the commodity, on which the user desires to use the purchase privilege, to the online advertisement distribution unit 107 via the radio base station 104, mobile telephone network 105, and Internet 106.

The online advertisement distribution unit 107 distributes an advertisement including purchase privilege information to the mobile phones 103 via the Internet 106, mobile telephone network 105, and radio base station 104, whereby the mobile phone 103 displays the advertisement. When a user operates purchase of a commodity, the mobile phone 103 transmits, to the purchase processing unit 108, information of the commodity to be purchased and the privilege information and client information as the purchase request data, which the mobile phones stores therein, via the radio base station 104, mobile telephone network 105, and Internet 106.

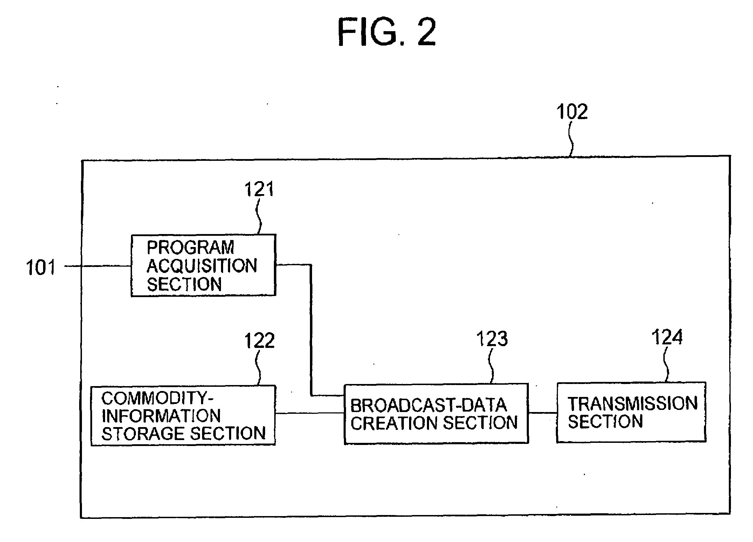

FIG. 2 is a block diagram showing in detail the configuration of the broadcasting unit 102 in FIG. 1. The broadcasting unit 102 receives data for a data-broadcast program from the data-broadcast production unit 101, and converts the same into the broadcast data as the TV program for broadcasting. The broadcasting unit 102 includes a program acquisition section 121, commodity-information storage section 122, a broadcast-data creation section 123, and a transmission section 124, as shown in the same drawing.

The program acquisition section 121 receives video data and audio data configured by a baseball relay broadcasting, a quiz program, etc. from among the program data produced by the data-broadcast production unit 101, and delivers the video data and audio data thus received to the broadcast-data creation section 123. In an alternative, the program acquisition section 121 once stores therein the video data and audio data, and delivers the video data and audio data thus stored to the broadcast-data creation section 123.

The commodity-information storage section 122 receives the commodity information of the sponsor company produced by the data broadcast production unit 101, and stores therein the received commodity information. The commodity information is configured by information of a CM for the program or information of a product of the sponsor company, and includes information peculiar to the commodity, such as company, trade name, color, size, trade number, and a unit price as to each product. The trade number is a sign that uniquely specifies each commodity. The broadcast-data creation section 123 creates the broadcast data from the data stored in the program acquisition section 121 and commodity-information storage section 122. The broadcast data means data converted into the broadcast format and multiplexed.

The broadcast-data creation section 123 reads the commodity information stored in the commodity-information storage section 122. The broadcast-data creation section 123 converts the commodity information into the broadcasting format, to output the same to the transmission section 124. The broadcast-data creation section 123 converts at any time from the start to the end of broadcasting the video data and audio data stored in the program acquisition section 121, and delivers the same to the transmission section 124. The transmission section 124 receives the broadcast data from the broadcast-data creation section 123, and consecutively transmits the received broadcast data.

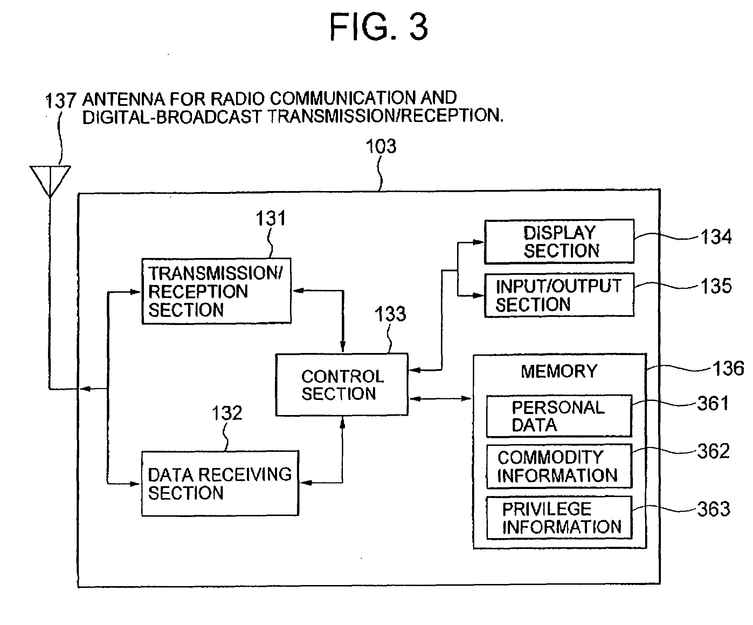

The mobile phone 103 is a portable telephone that performs mobile communications using a radio wave. The mobile phone 103 is owned by a data-broadcast recipient (user), is connected to the online advertisement distribution unit 107 and purchase processing unit 108 via the radio base station 104, mobile telephone network 105 and Internet 106, and performs transmission/reception of information between the same and the online advertisement distribution unit 107 as well as the purchase processing unit 108. FIG. 3 is a block diagram showing the detailed configuration of the mobile phone 103. The mobile phone 103 includes, as shown in the same drawing, a transmission/reception section 131, a data receiving section 132 configured as the data-broadcast receiver set, a control section 133, a display section 134, an input/output section 135, and a memory 136. Numeral 137 denotes an antenna used for radio communication and digital-broadcast transmission/reception.

The mobile phone 103 is in particular a computer system that includes a microprocessor, a ROM, a RAM, a display unit, a keyboard section, a receiving section for receiving data broadcast from the broadcasting unit 102, a communication section for communicating with the radio base station 104, the antenna, etc. Computer programs are stored in the RAM. The mobile phone 103 achieves the function thereof by operating microprocessor in accordance with the computer programs.

The transmission/reception section 131 transmits online-advertisement request data and purchase request data, which are received from the control section 133, via the radio base station 104, mobile telephone network 105, and Internet 106 to the online advertisement distribution unit 107 and purchase processing unit 108. The transmission/reception section 131 receives online advertising data and purchase acknowledgement data via the Internet 106, mobile telephone network 105 and radio base station 104, and outputs the received purchase acknowledgement data to the control section 133.

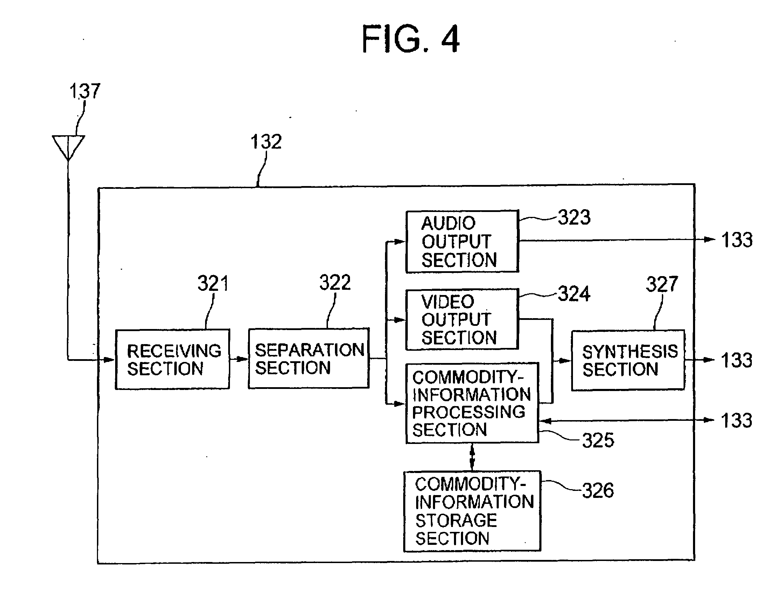

FIG. 4 is a block diagram showing the detailed configuration of the data receiving section 132 in FIG. 3. The data receiving section 132 includes, as shown in the same drawing, a receiving section 321, a separation section 322, an audio output section 323, a video output section 324, a commodity-information processing section 325, a commodity-information storage section 326, and a synthesis section 327.

The receiving section 321 selects the broadcast data having a frequency specified by the user, receives the broadcast data via the antenna of the mobile phone 103, and outputs the received broadcast data to the separation section 322. The separation section 322 receives the broadcast data from the receiving section 321, and separates the received broadcast data to generate audio data, video data, or commodity information. Further, the separation section 322 delivers the audio data thus generated to the audio output section 323, the video data to the video output section 324, and the commodity information to the commodity-information processing section 325.

The audio output section 323 receives the audio data from the separation section 322, converts the received audio data into an analog audio signal, and outputs the converted analog audio signal to the input/output section 135 via the control section 133. The video output section 324 receives the video data from the separation section 322, converts the received video data into an analog video signal, and outputs the converted analog video signal to the synthesis section 327.

The commodity-information processing section 325 receives the commodity information from the separation section 322, and performs the processings as described hereinafter. The commodity-information processing section 325 creates character information to be displayed on the display section 134 from the received commodity information, converts the generated character information into an analog video signal, and outputs the converted analog video signal to the synthesis section 327. The commodity-information processing section 325 further delivers the commodity information to the memory 136 via the control section 133. The character information delivered from the commodity-information processing section 325 is menu information through which the user of the mobile phone 103 refers to the commodity list.

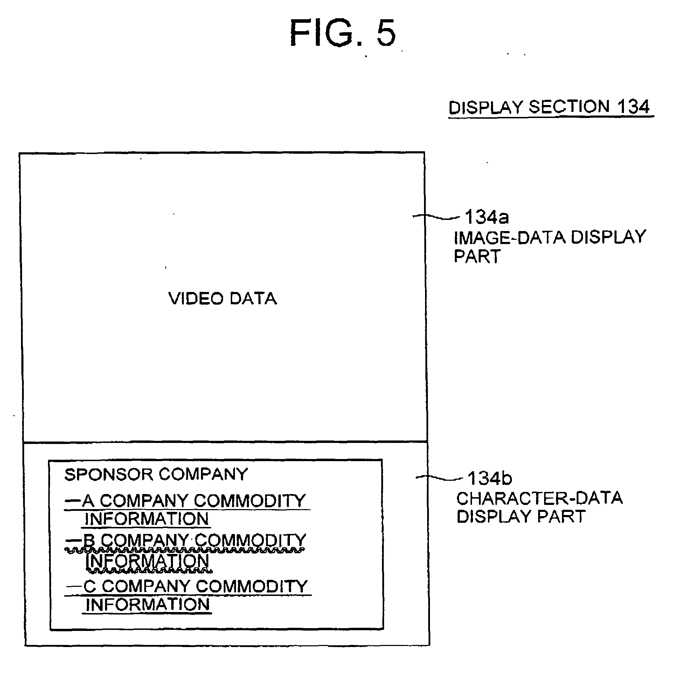

FIG. 5 shows an example of the display on the display section 134. As shown in the same drawing, there are provided in the display section 134 an image-data display part 134a for showing thereon the video data, and a character- information display part 134b for showing thereon the character information. Examples of the video data include video contents provided by each digital-television broadcasting station. The character information shown on the character-information display part 134b has a layer structure similar to that of the HTML language, and a sponsor company name, a trade name, and commodity information are displayed on the character-information display part 134b while being switched in this order. An underline on the character-information display part 134b means that the corresponding item may be selected, and a wavy double underline means that the corresponding item is selected by the operator (user) of the mobile phone 103.

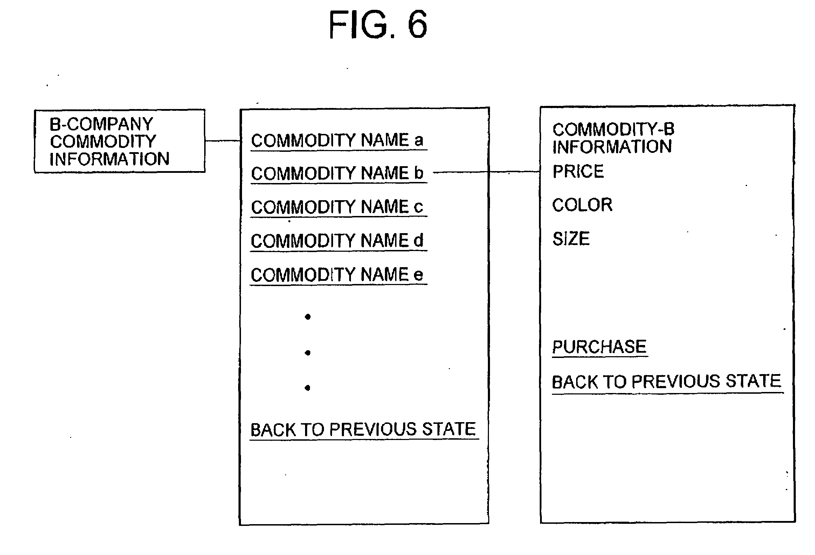

FIG. 6 is a block diagram showing the layer structure of the character information. In the display of FIG. 5, if "B-company commodity information" is selected, trade names are displayed in a manner such as trade name-a, trade name-b, trade name-c, .... , wherein the items that allow a selection are underlined. "Back to previous state" means that the display returns to the selection screen page that is shown previously for selecting the company name. For example, if "trade name-b" is further selected here, detailed information of the trade name-b is displayed. "Purchase" means that the commodity of the trade name-b thus selected is purchased. "Back to previous state" means that the display returns to the screen page on which the trade names are shown.

If an item of the character information is selected to execute an input to the input/output section 13 5, the information thus input is delivered to the commodity-information processing section 325 via the control section 133. The commodity-information processing section 325, after reading from the commodity-information storage section 326 the character information specified by the input, converts the character information into an analog video signal, and outputs the converted analog video signal to the synthesis section 327. The commodity-information storage section 326 receives the commodity information from the commodity-information processing section 325, and stores therein the received commodity information.

The synthesis section 327 receives the analog video signal from the video output section 324, and receives the analog character information from the commodity-information processing section 325. The synthesis section 327 synthesizes the analog video signal and the analog character information thus received to generate a synthesized analog video signal, and outputs the thus generated synthesized analog video signal to the display section 134. A video signal configured by video data and character information is output on the display section 134.

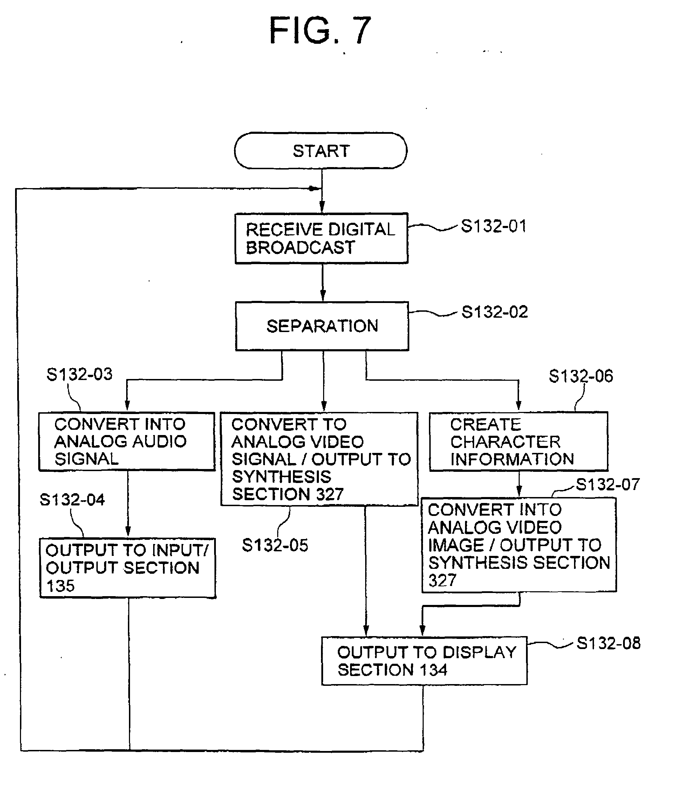

FIG. 7 is a flowchart showing the operation procedure of the data receiving section 132. The receiving section 321 receives broadcast data (step S132-01), and the separation section 322 separates the received broadcast data into audio data, video data, and commodity data (step S132-02). The audio output section 323 converts the separated audio data into an analog audio signal (step S132-03), and outputs the same to the input/output section 135 (step S132-04). The process then returns to step S132-01 to iterate the processings. The video output section 324 converts the separated video data into an analog video signal, and outputs the same to the synthesis section 327 (step S132-05).

The commodity-information processing section 325 generates character information from the separated commodity information (step S132-06). The commodity-information processing section 325 converts the character information into an analog video signal, and outputs the same to the synthesis section 327 as a commodity information screen page (step S132-07). The synthesis section 327 synthesizes the analog video signal and the analog character information thus received, and outputs the same to the display section 134 (step S132-08). The process then returns to step S132-01 to iterate the processings.

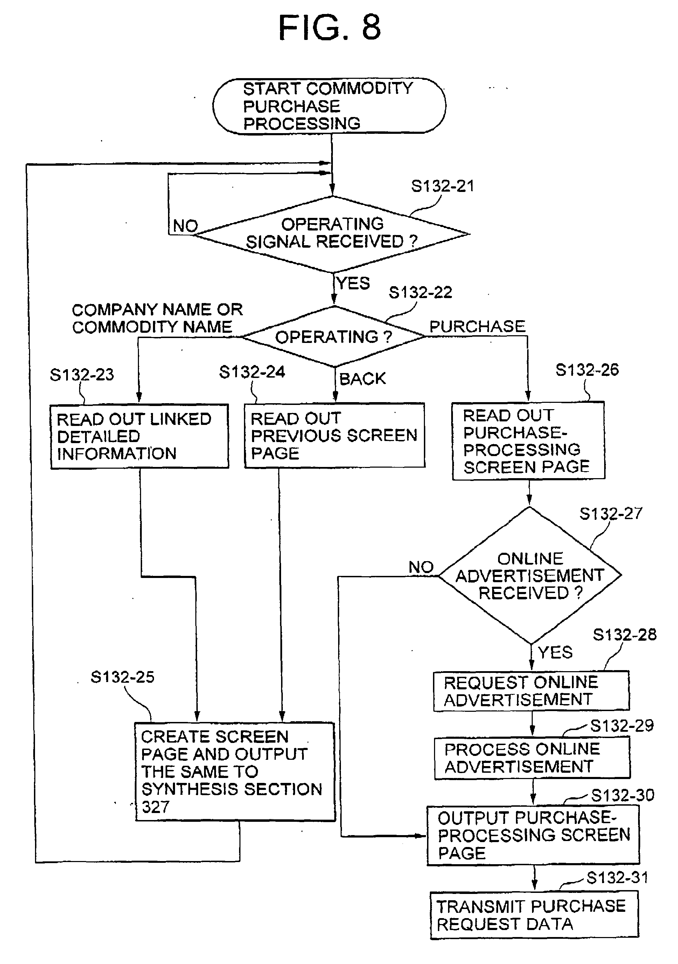

FIG. 8 is a flowchart showing the operation procedure of the commodity-information processing section 325 of the data receiving section. The operation in the same drawing is the detail of step S132-07 in the flowchart of FIG. 7. The commodity-information processing section 325 performs processings according to the operation through the input/output section 135. The commodity-information processing section 325 judges whether or not an operating signal is received. If the operating signal is not received (No in step S132-21), the process returns to the processing of step S132-21. If an operating signal is received (Yes in step S132-21), the commodity-information processing section 325 judges what the received operating signal is.

If the operating signals is a "company name or trade name" ("company name" or trade name" in step S132-22), the commodity-information processing section 325 reads the character information corresponding to the item selected by a wavy double underline (step S132-23). A commodity information screen page is generated from the read character information, the generated commodity information screen page is delivered to the synthesis section 327 (step S132-25), and the process returns to step S132-21.

If the operating signal is "return" ("back" in step S132-22), the commodity-information processing section 325 calls the screen page that is displayed previously, or reads a linked URL (step S132-24), creates a commodity information screen page from the read character information, and outputs the created commodity information screen page to the synthesis section 327 (step S132-25). Then, the process returns to step S132-21.

If the operating signal is "purchase" ("purchase" in step S132-22), the commodity-information processing section 325 reads the purchase processing screen (step S132-26). A confirmation message as to whether or not the online advertisement is to be received for acquiring the right of obtaining the privilege upon purchase of a commodity is output to the display section 134 (step S132-27).

If the user does not need such (No in step S132-27), a purchase processing screen page is created from the read purchase processing information, followed by outputting the generated purchase processing screen page to the synthesis section 327 (step S132-30), and transmitting the purchase request data (step S132-31). Here, the purchase processing screen page is a screen page on which the user selects a purchased number of the commodities selected by the operator (user) and the amount of payment thereof and manner of payment, and which transmits the purchase request data to the purchase processing unit.

If the user needs such (Yes in step S132-27), the mobile phone 103 transmits advertisement request data indicating a request of online advertisement to the online advertisement distribution unit 107 via the radio base station 104, mobile telephone network 105, and Internet 106 (step S132-28).

The online advertisement distribution unit 107 transmits an advertisement attached with the privilege information to the mobile phone 103 via the Internet 106, mobile telephone network 105, and radio base station 104. In the mobile phone 103, the transmission/reception section 131 receives the same, and the commodity-information processing section 325 writes the privilege information into the commodity-information storage section 326 via the control section 133, creates analog video data and delivers the created online advertisement screen page to the synthesis section 327 (step S132-29).

A purchase processing screen page is generated from the read purchase processing information, the generated purchase processing screen page is delivered to the synthesis section 327 (step S132-30), and purchase request data is transmitted (step S132-31). Privilege information is included in the purchase request data if "Yes" in step S132-27. The advertisement request data includes information of the commodity for which use of the purchase privilege is desired, and the IP address and telephone number information of the mobile phone. The advertisement attached with the privilege information includes the term of validity of the purchase privilege.

Back to FIG. 3, the control section 133 is configured by a microprocessor and a RAM. The RAM stores therein computer programs used for control, and the microprocessor achieves functions, as described hereinafter, by executing the computer programs. The control section 133 receives the commodity information from the data receiving section 132, and writes the received commodity information into the memory 136. The control section 133 receives the operating signal for the character information from the input/output section 135, and delivers the received operating signal to the data receiving section 132.

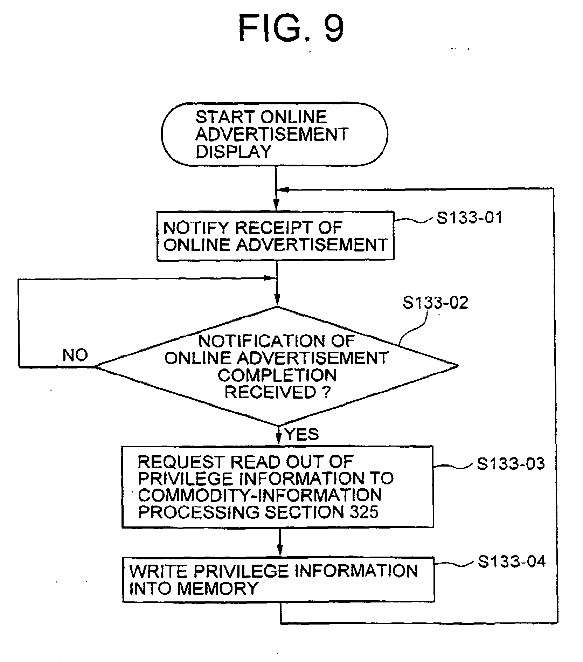

The control section 133 receives an online advertisement from the data receiving section 132, outputs the same to the display section 134, and stores the privilege information of an applicable commodity or an applicable commodity group in the privilege information area 363 of the memory 136 after all the data is transmitted. FIG. 9 is a flowchart showing this operation procedure in the control section 133. If a notice of online advertisement receipt is received (step S133-01), receipt of a notice of the online advertisement completion is monitored, and if it is not received (No in step S133-02), the monitor is continued. When the notice of online advertisement completion is received during the monitoring (Yes in step 133-02), read-out of the privilege information is requested to the commodity-information processing section 325 (step S133-03). The control section 133, after receiving the privilege information read out by the commodity-information processing section 325, write the privilege information into the memory (step S133-04), and thereafter set to a standby state for waiting the notice of the online advertisement receipt.

The control section 133 receives the trade number of the commodity to be purchased from the data receiving section 132, and reads the personal data stored in the personal-data area 361 of the memory 136. The control section 133 generates purchase request data including the received trade number and the read personal data, and delivers the generated purchase request data to the transmission/reception section 131. The purchase request data is comprised of the personal data, trade number, manner of payment, and privilege information, wherein the manner of payment specifies one of a plurality of options such as "payment by credit card", and "bank account transfer", and the privilege information means information of the right that can receive a privilege which is capable of being obtained after receiving and displaying the online advertisement.

The control section 133 receives the privilege information from the online advertisement distribution unit 107 via the transmission/reception section 131, and reads out the received privilege information. The received privilege information is delivered to the commodity-information processing section 325. As to the privilege information thus received, the commodity-information processing section 325 reads the trade name, which is the target of the privilege information, from the commodity information in the commodity-information storage section 326, updates the character information, and delivers the same to the display section 134. The user can assure the fact of having acquired the right of purchase privilege with reference to the display section 134. The display section 134, which is comprised of a liquid crystal display unit, receives the analog video data generated by the data receiving section 132 via the control section 133, and displays the received analog video data thereon.

The input/output section 13 5 includes a plurality of keys, such as "UpArrow", "DownArrow, "Menu", and "Return", provided on the operating surface of the mobile phone 103, receives an operating instruction from the user, and delivers an operating signal corresponding to the operating instruction to the control section 133. The input/output section 135 includes a speaker which outputs analog audio data from the audio output section 323.

The memory 136 is configured by a semiconductor memory and includes a commodity information area 362 storing the commodity information, and a privilege information area 363 storing the privilege information. The memory 136 stores beforehand in the personal-data area 361 the personal data, which is information of the users of the data-broadcast online shopping. The personal data include the name, address, telephone number, age, sex, occupation, family structure, and credit card information of the users.

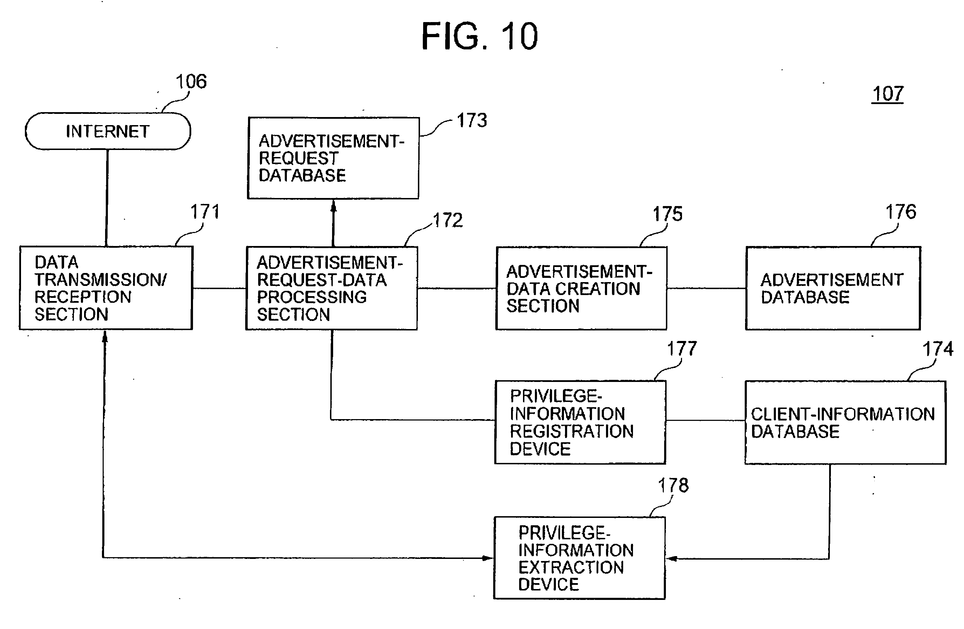

The online advertisement distribution unit 107 is installed in the sponsor company or on the digital broadcaster side, and performs reception of the advertisement request data from the mobile phone 103, production of the advertisement data, transmission of the generated advertisement data to the mobile phone 103, etc. FIG. 10 is a block diagram showing the configuration of the online advertisement distribution unit 107. As shown in the same figure, the online advertisement distribution unit 107 is comprised of a data transmission/reception section 171, an advertisement-request-data processing section 172, advertisement-request database 173, a client-data privilege-information database 174, advertisement-data creation section 175, an advertisement database 176, and a privilege-information registration device 177, and a privilege-information extraction device 178, and is connected to the Internet 106.

The online advertisement distribution unit 107 is configured by a computer system including a microprocessor, a ROM, a RAM, a display unit, a keyboard section, a communication section, etc. The computer programs are stored in the RAM. The microprocessor operates in accordance with the computer programs, to achieve the functions of the online advertisement distribution unit 107.

The data transmission/reception section 171 receives advertisement request data including information of the commodity for which use of the purchase privilege is desired, and the IP address and telephone number information of the mobile phone 103 from the mobile phone 103 via the radio base station 104, mobile telephone network 105, and Internet 106, and passes the received advertisement request data to the advertisement-request-data processing section 172.

The advertisement-request-data processing section 172 has a function of receiving advertisement request data from the data transmission/reception section 171, and writing the received advertisement request data into the advertisement-request database 173 in association with the request ID. The advertisement-request-data processing section 172 has another function of outputting the commodity information and a request ID to the advertisement-data creation section 175 from the advertisement request data.

The advertisement-request database 173 receives the advertisement request data from the advertisement-request-data processing section 172, and stores the received advertisement request data and request ID. The client-information database 174 includes an area for storing therein data of a plurality of persons together with the privilege information thereof, receives the IP address and telephone number information of the mobile phone 103 from the advertisement-request-data processing section 172 via the privilege-information registration device 177, and stores therein the received IP address and telephone number information of the mobile phone 103. The advertisement database 176 stores therein the commodity information, advertisement data, and privilege information in association with one another.

The advertisement-data creating section 175 receives the commodity information from the advertisement-request-data processing section 172, and extracts advertisement data and privilege information from the advertisement database 176. The advertisement-data creating section 175 delivers the advertisement data including the commodity information, advertisement data, and privilege information to the advertisement-request-data processing section 172. The advertisement-request-data processing section 172 outputs the advertisement data via the data transmission/reception section 171, and delivers the same to the privilege-information registration device 177. The privilege-information registration device 178 has a function of registering in the client-information database 174 the commodity information, privilege information, and ID of the advertisement requestor in association with one another. The privilege information extraction device.

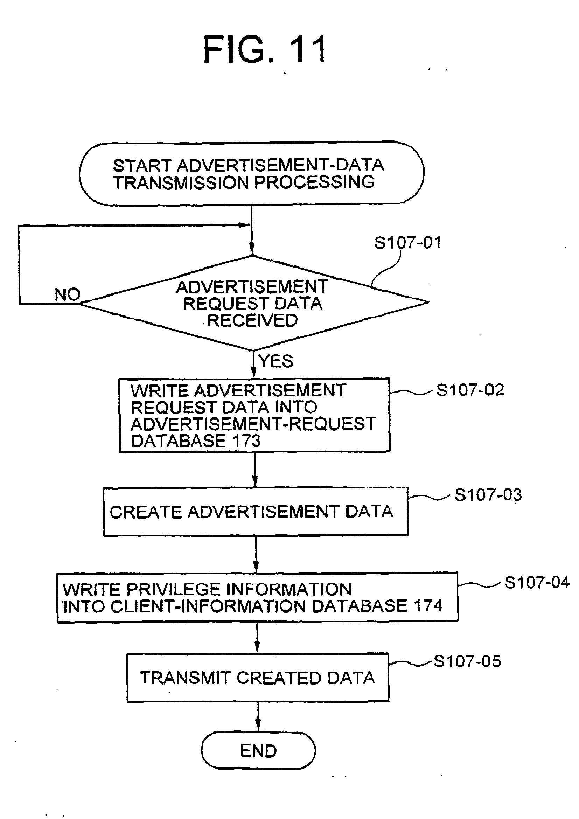

FIG. 11 is a flowchart showing the operation procedure of the online advertisement distribution unit 107. If the data transmission/reception section 171 receives advertisement request data from the mobile phone 103 via the radio base station 104, mobile telephone network 105, and Internet 106 (Yes in step S107-01), the advertisement-request-data processing section 172 receives the advertisement request data from the transmission/reception section 171, and writes the same into the advertisement-request-data storage section 173 (step S107-02). If advertisement request data is not received in step S107-01 (No in step S107-01), the process returns to step S107-01 of waiting the advertisement request data. The advertisement-data creation section 175 creates the privilege information and online advertisement data from the commodity information as to the commodity specified by the received advertisement request data (step S107-03). The client data including the IP address and telephone number information of the mobile phone 103 is written into the chent-information database 174 together with the commodity information and the acquired privilege information (step S107-04). After the data transmission/reception section 171 transmits the generated data to the mobile phone 103 (step S107-05), the process comes to an end.

The purchase processing unit 108 is installed in the sponsor company or on the digital broadcaster side, and receives data of the commodity to be purchased and the privilege information and client data stored in the mobile phone 103 as the purchase request data, via the radio base station 104, mobile telephone network 105, and Internet 106 from the mobile phone 103.

The purchase processing units 108 is in particular a computer system configured by a microprocessor, a ROM, a RAM, a display unit, a keyboard section, a communication section etc. Computer programs are stored in the RAM. When the microprocessor operates according to the computer programs, purchase processing unit 108 achieves this function.

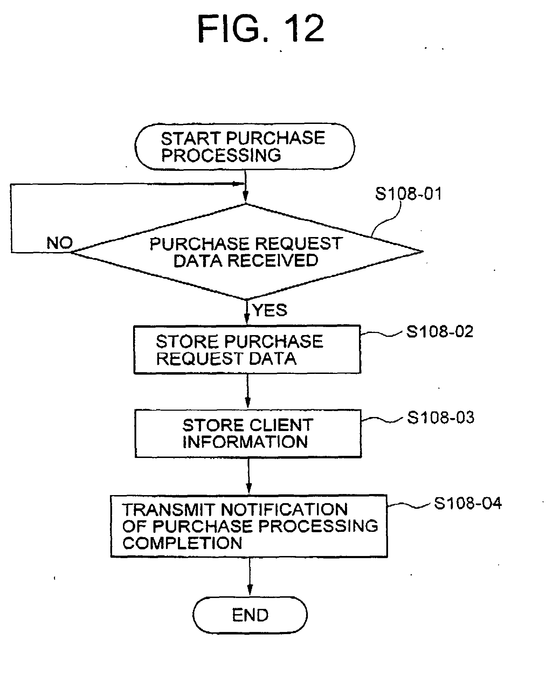

FIG. 12 is a flowchart showing the operation procedure of the purchase processing unit 108. First, the purchase processing unit 108 receives the purchase request data from the mobile phone 103 via the radio base station 104, mobile telephone network 105, and Internet 106 (step S 108-01). The purchase processing unit 108 stores the received purchase request data (step S108-02). Subsequently, the purchase processing unit 108 reads the client data from the purchase request data, and stores also the read client data (step S108-03). After the purchase processing is completed, a notice of completion is transmitted to the mobile phone 103 via the Internet 106, mobile telephone network 105, and radio base station 104 (step S108-04). With reference to the purchase request data and client data stored in the purchase processing unit 108, the sponsor company can ship the commodity.

A first advantage of the present exemplary embodiment is such that since the advertisement is distributed based on the request of a user, the user can easily acknowledge presence or absence of the privilege. A second advantage is such that since the advertisement is distributed based on the request of the user, interest of the user can be increased whereby the effect of the advertisement of the sponsor company is enlarged. A third advantage is such that since the privilege information is acquired only by operation of receiving the online advertisement, a complicated operation in the mobile phone 103, which is involved in the commodity sales system of Patent Publication 1, can be obviated. A fourth advantage is such that since the online advertisement distribution unit 107 manages the personal information and privilege information on the sponsor company side, the service of a privilege can be offered even if the mobile phone 103 does not have a function of storing the privilege right

Although the mobile phone 103 directly receives the broadcast data of the digital broadcasting in the exemplary embodiment, a MBMS (Multimedia Broadcast Multicast Service), for example may be used to receive the data via the radio station. In addition, although a mobile phone is used for transmission of the purchase request data and reception of the privilege information in the exemplary embodiment, this is not limited to the mobile phone, and an apparatus other than the mobile phone, such as a PHS and a portable information device, may be used so long as it is a communication equipment having a data storage function.

Although the configuration in the exemplary embodiment is such that an Internet provider intervenes between the mobile phone 103 and the purchase processing unit 108 to reduce the public line equipment, the configuration may be such that the mobile phone 103 and the purchase processing unit 108 are directly connected. Although a single mobile phone 103 is shown in FIG. 1, any number of mobile phones may be provided. For example, a system including tens of thousands to tens of millions of mobile phones 103 is premised in particular.

The personal data is not limited to the above configuration, and may include an item that the sponsor company wishes to obtain as the user information. The configuration may be such that the sponsor company obtains detailed information of a user when the user transmits the personal data to the sponsor company upon purchase of a commodity. Upon determining the sponsor fee for delivery of the advertisement, the sponsor fee may be determined based on the number of deliveries of the online advertisement that is recorded by the online advertisement distribution unit 107.

Although the online advertisement distribution processing is performed just before the purchase processing in the exemplary embodiment (FIG. 8), the purchase processing may be performed in any stage. As to the character information to be displayed on the display section 134, the character information may be stored beforehand in the mobile phone 103 for the display. Although the mobile phone 103 generates the character information in the exemplary embodiment, it may be distributed directly from the digital broadcaster.

The advertisement data, which is delivered by the online advertisement distribution unit 107 in the exemplary embodiment, may have a variety of configurations, and may be streaming animation, downloaded animation, video or audio data, or may be Web page data. Alternatively, the data may be a computer program that realizes these techniques, or may be a digital signal configured by a computer program.

The present invention may be computer-readable recording media, such as floppy disc (registered trademark), hard disk, CD-ROM, MO, DVD, DVD-ROM, DVD-RAM, or semiconductor memory, that record thereon a computer program or a digital signal. Alternatively, the present invention may be a computer program or a digital signal recorded on these recording media.

The present invention may be networks such as electric-telecommunication line, wireless or a wired communication line, and the Internet that transmit a computer program or a digital signal. The present inventions may be a computer system including a microprocessor and a memory, wherein the memory stores therein the computer program, and the microprocessor operates in accordance with the computer program.

The present invention may be reduced to practice using another independent computer by recording a program or digital signal on a recording medium and transferring the recording medium thereto, or by transferring the program or digital signal thereto via the network etc. The above exemplary embodiment and each of the above modifications may be combined.

Although it is recited in the present invention that the advertisement system or commodity sales system includes the registration device and privilege-information extraction device, the configuration may be that the portable terminal registers, upon receipt of the advertisement data, the commodity of the received advertisement data and privilege information in association therewith in an internal database, and extracts, upon transmission of the commodity purchase request, the privilege information of the specified commodity from the internal database.

While the present invention has been described with reference to a preferred, exemplary embodiment thereof, the advertisement system and commodity sales system according to the present invention are not restricted only to the configuration of the above exemplary embodiment, and an advertisement system and commodity sales system altered or modified from the above exemplary embodiment will fall within the scope of the present invention.

## Claims

1. An advertisement system for advertising a commodity via a communication network, comprising:
an advertisement-data creation device (175) that extracts, upon receiving an advertisement transmission request specifying a commodity via the communication network from a terminal unit (103), advertisement data of the commodity specified by said transmission request from an advertisement database (176) storing therein a commodity and advertisement data in association, and attaches privilege information to said extracted advertisement data to create advertisement data;
a client-information registration device (177) that registers in a client-information database information identifying said terminal unit as a counterpart that transmitted said advertisement transmission request, a commodity corresponding to said extracted advertisement data, and said privilege information in association with one another; and
a privilege-information extraction device (178) that extracts, upon receiving information showing that a commodity purchase request is received from a terminal unit (103), a privilege to be offered to said terminal unit (103) that issued said commodity purchase request, with reference to said client-information database (174).

2. The advertisement system according to claim 1, wherein said advertisement database stores therein a commodity, corresponding commodity advertisement data and said privilege information in association with one another.

3. A commodity sales system comprising:
a broadcasting unit (102) that transmits a digital broadcasting including information of a commodity;
an advertisement-data creation device (175) that extracts, upon receiving an advertisement transmission request specifying a commodity via a communication network from a terminal unit (103) that received said digital broadcasting, advertisement data of the commodity specified by said transmission request from an advertisement database (176) storing therein a commodity and advertisement data in association, and attaches privilege information to said extracted advertisement data to create and transmit advertisement data;
a client-information registration device (177) that registers in a client-information database information identifying said terminal unit as a counterpart that issued said advertisement transmission request, a commodity corresponding to said extracted advertisement data, and said privilege information in association with one another; and
a privilege-information extraction device (178) that extracts, upon receiving information showing that a commodity purchase request is received from a terminal unit (103), a privilege to be offered to said terminal unit (103) that transmitted said commodity purchase request with reference to said client-information database (174).

4. The commodity sales system according to claim 3, wherein said broadcasting unit (102) transmits said digital broadcasting to said terminal unit (103) via a radio base station.

5. An advertisement method using a server connected to a terminal unit via a communication network, for advertising a commodity through said server, said method comprising the steps of:
said server (107) receiving an advertisement transmission request specifying a commodity via the communication network from a terminal unit (103), extracting advertisement data of the commodity specified by said transmission request from an advertisement database (176) storing therein a commodity and advertisement data in association, and attaching privilege information to said extracted advertisement data to create and transmit advertisement data;
said server (107) registering, in a client-information database (174) information identifying the destination terminal unit to which the privilege information is transmitted, a commodity corresponding to said extracted advertisement data, and said privilege information in association with one another; and
said server (107) receiving information showing that a commodity purchase request is received from a terminal unit (103), and extracting a privilege to be offered to said terminal unit (103) that transmitted said commodity purchase request with reference to said chent-information database (174).

6. The advertisement method according to claim 5, wherein said advertisement database (176) stores therein a commodity, corresponding commodity advertisement data and said privilege information in association with one another.

7. A commodity sales method for selling a commodity by using a broadcasting unit (102) that transmits a digital broadcasting and a server (107) that manages an online advertisement using the digital broadcasting, said method comprising: the steps of:
said broadcasting unit (102) transmitting the digital broadcasting including a commodity name;
said server (107) receiving an advertisement transmission request for the broadcasted commodity name via a communication network from a terminal unit (103), extracting advertisement data of the commodity specified by said transmission request from an advertisement database (176) storing therein a commodity and advertisement data in association, and attaching privilege information to said extracted advertisement data to create and transmit advertisement data;
said server (107) registering in a client-information database (174) information identifying the destination terminal unit (103) to which said privilege information is transmitted, a commodity corresponding to said extracted advertisement data, and said privilege information in association with one another;
said server (107) extracting, upon receiving information showing that a commodity purchase request is received from a terminal unit (103), a privilege to be offered to said terminal unit (103) that transmitted said commodity purchase request with reference to said client-information database (174); and
said server (107) offering said extracted privilege to said terminal unit (103) that transmitted said commodity purchase request.

8. A program for a server connected to a terminal unit via a communication network for advertising a commodity therethrough, said program allowing said server to execute the steps of:
extracting, upon receiving an advertisement transmission request specifying a commodity via the communication network from a terminal unit (103), advertisement data of the commodity specified by said transmission request from an advertisement database (176) storing therein a commodity and advertisement data in association, and creating advertisement data for transmission by attaching privilege information to said extracted advertisement data;
registering in a client-information database (174) information identifying said terminal unit (103) as a counterpart that transmitted said advertisement transmission request, a commodity corresponding to said extracted advertisement data, and said privilege information in a client-information database in association with one another; and
extracting, upon receiving information showing that a commodity purchase request is received from a terminal unit (103), a privilege to be offered to said terminal unit (103) that transmitted said commodity purchase request, with reference to said client-information database (174).

9. A program for a commodity sales system including a server that manages an online advertisement using the digital broadcasting, said program allowing said server to execute the steps of:
transmitting the digital broadcasting including a commodity name from said broadcasting unit (102);
extracting, upon receiving an advertisement transmission request specifying a commodity via a communication network from a terminal unit (103) I said server (107), advertisement data of the commodity specified by said transmission request from an advertisement database (176) storing therein a commodity and advertisement data in association, and attaching privilege information to said extracted advertisement data to create and transmit advertisement data;
registering, in a client-information database by said server (107), information identifying the destination terminal unit (103) to which said privilege information is transmitted, a commodity corresponding to said extracted advertisement data, and said privilege information in association with one another;
extracting, upon receiving by said server (107) information showing that a commodity purchase request is received from a terminal unit (103) in said server (107), a privilege to be offered to said terminal unit (103) that transmitted said commodity purchase request with reference to said client-information database (174); and
offering said extracted privilege to said terminal unit (103) that transmitted said commodity purchase request.
